# EUROPEAN PATENT APPLICATION

(11) **EP 1 848 056 A1**
(43) Date of publication of application: **24.10.2007**
(21) Application number: 07008149.2
(22) Date of filing: 20.04.2007
(51) Int. Cl.: H01M 8/04

(54) **Fuel cell system**

(30) Priority: 21.04.2006 JP 2006117342
(71) Applicant: YAMAHA HATSUDOKI KABUSHIKI KAISHA, Iwata-shi, Shizuoka-ken 438-8501 (JP)
(72) Inventor: Kurosawa, Atsushi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a fuel cell system comprising a fuel cell which generates electric power through a reaction between hydrogen gas supplied from a hydrogen supply device, and oxygen gas in air supplied from an air supply device having an electric motor, wherein a humidification state determination means configured to determine the humidification state in the fuel cell based on a power consumption of the electric motor of the air supply device.

## Description

The present invention relates to a fuel cell system provided with a humidification state determination means for determining the humidification state in a fuel cell.

Some conventional devices such as vehicles operate on electric power generated by a fuel cell system having a fuel cell. The operating condition of such a fuel cell system depends to a large degree on the amount of water (humidification amount) contained in the electrolyte membrane in the fuel cell. Therefore, a fuel cell system provided with a humidification control means for determining whether the amount of water contained in the electrolyte membrane of a fuel cell is excessive or insufficient and controlling the humidification state in the fuel cell based on the determination to maintain the fuel cell system in good operating condition has been developed (see Patent Document 1, for example).

The fuel cell system has a current detection means for detecting the current outputted from the fuel cell; a resistance detection means for detecting the resistance of the fuel cell during a current sweep; and a humidification state determination means for determining the humidification state of an electrolyte membrane based on the current detected by the current detection means and the resistance detected by the resistance detection means. The fuel cell system also has a humidification control means for controlling the amount of humidification to the fuel. The humidification control means is configured to decrease the humidification to the fuel when the humidification state determination means determines that the humidification state of the electrolyte membrane is excessive.

Patent Document 1: JP-A-2000-243418

In the conventional fuel cell system described above, however, since the resistance detection means must be provided in the cells or the cell stack of the fuel cell, the number of devices is large and the entire structure of the fuel cell system is complicated.

Also, since the output current needs be swept when the internal resistance of the fuel cell is detected, the control method is complicated. In other words, in the fuel cell system, since the internal resistance of the fuel cell is obtained based on a change in output current, the humidification state cannot be determined when there is no change in the output current. The voltage detection means can be used as the resistance detection means but, in this case, an operating condition must be changed to increase the amount of air to be supplied to the fuel cell when determination of the humidification state is made.

The present invention has been made to solve the above problems, and it is, therefore, an object of the present invention to provide a fuel cell system which is simple in structure and easy to control and which is provided with a humidification state determination means which can determine the humidification state in a fuel cell without changing an operating condition.

This objective is solved in an inventive manner by a fuel cell system comprising a fuel cell which generates electric power through a reaction between hydrogen gas supplied from a hydrogen supply device, and oxygen gas in air supplied from an air supply device having an electric motor, wherein a humidification state determination means is configured to determine the humidification state in the fuel cell based on a power consumption of the electric motor of the air supply device.

Preferably, the humidification sate determining means is configured to compare the power consumption of the electric motor when air is supplied from the air supply device to the fuel cell with a preset threshold value of power consumption to determine the humidification state.

Further, preferably the threshold value of power consumption is defined as a map showing the relation between the power consumption of the motor of the air supply device and the amount of air supplied to the fuel cell.

Still further, preferably the threshold value of power consumption is set based on the electric power which the electric motor consumes when a constant amount of air is supplied to the fuel cell, in which the humidification state changes.

Yet further still, preferably the pressure of air to be supplied from the air supply device to the fuel cell is set to a pressure which is greater than the pressure of air having passed through the fuel cell and to be discharged to the outside of the fuel cell and close to the pressure of air to be discharged.

According to another preferred embodiment, the fuel cell system further comprises an operation temperature control means for increasing the operation temperature of the fuel cell when the humidification state determination means determines that the inside of the fuel cell is excessively humidified.

According to yet another preferred embodiment, the fuel cell system further comprises a cooling water device for cooling the fuel cell, wherein the operation temperature control means is constituted of a cooling water temperature adjusting means which increases the operation temperature of the fuel cell by adjusting the cooling capacity of the cooling water device.

Preferably, when the humidification state determination means determines that the inside of the fuel cell is excessively humidified, the cooling water temperature adjusting means makes an adjustment to increase the temperature of cooling water in the cooling water device as the difference between the electric power being consumed in the electric motor and a preset threshold value of power consumption is greater.

In the following, the present invention is explained in greater detail with respect to several embodiments thereof in conjunction with the accompanying drawings, wherein:
- FIG. 1: is a side view illustrating a motorcycle provided with a fuel cell system according to one embodiment,

- FIG. 2: is a configuration diagram of the fuel cell system,
- FIG. 3: is a flowchart illustrating a program for controlling the humidification state in the fuel cell, and
- FIG. 4: is a map showing the relation between the amount of air supplied to the fuel cell and the power consumption consumed by an air blower.

### Description of Reference Numerals and Symbols:

25: fuel cell
27: radiator
27b: fan
27c: motor
28: water pump
29a, 29b: cooling water pipe
29c: bypass passage
31: three-way valve
32: hydrogen tank
37: air blower
38b: gas pipe
50: power source system control device
51: current sensor
52: voltage sensor
53: pressure sensor
55, 56: temperature sensor
P1, P2: pressure
S: fuel cell system
W: power consumption

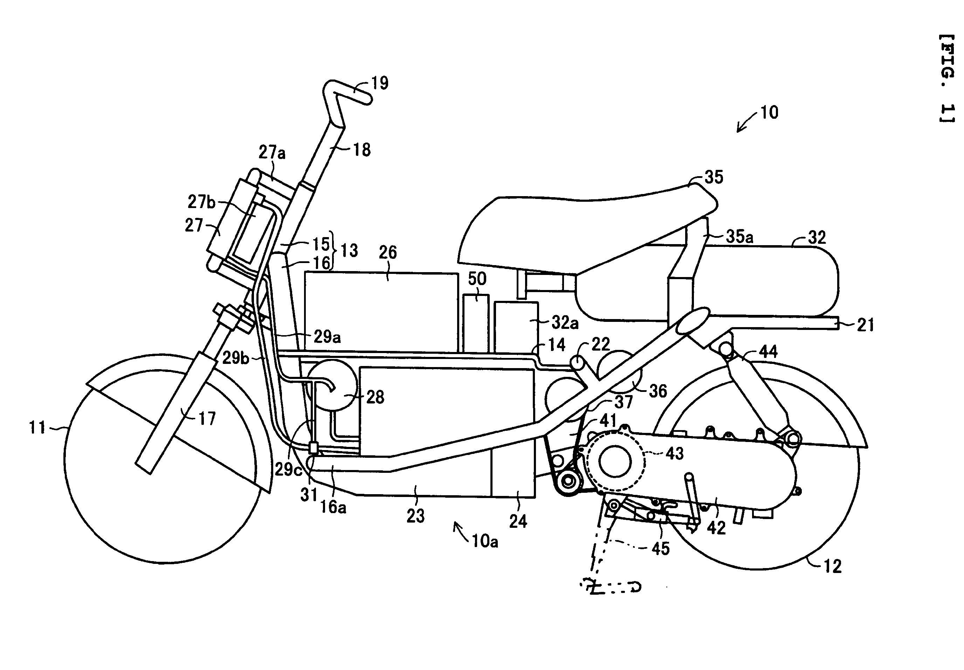

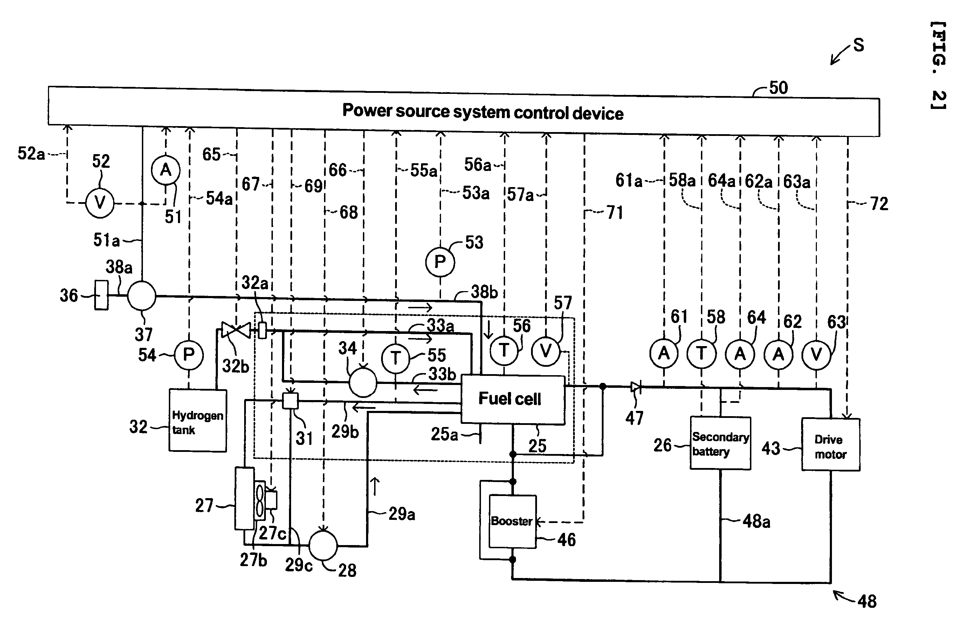

Description is hereinafter made of a fuel cell system according to an embodiment in detail with reference to the drawings. FIG. 1 shows a motorcycle 10 provided with a fuel cell system S (see FIG. 2) according to the embodiment. The motorcycle 10 has a pair of wheels including a front wheel 11 and a rear wheel 12, and a vehicle body 10a, to which the paired wheels are attached. The vehicle body 10a has a body frame 13 forming an essential part of the vehicle body 10a and a sub-frame 14 removably attached to the body frame 13. The body frame 13 has a head pipe 15 forming a front part of the vehicle body 10a and a down tube 16 extending backward from the head pipe 15.

The front wheel 11 is rotatably supported at the lower end of a front fork 17 having a two-forked lower portion. In other words, both lower ends of the front fork 17 rotatably support both ends of the axle (not shown) of the front wheel 11 to allow rotation of the front wheel 11 about the axle. The lower end of a steering shaft 18 placed in a head pipe 15 is connected to the upper end of the front fork 17. The steering shaft 18 is attached in the head pipe 15 for rotation about the axis of the head pipe 15, and has an upper end protruding from the head pipe 15 and extending upward.

The upper end of the steering shaft 18 is connected to the center of a handle bar 19 disposed generally horizontally and extending laterally. Therefore, when the handle bar 19 is rotated to rotate the steering shaft 18 about its axis, the front wheel 11 turns to the right or left about the axis of the front fork 17 in proportion to the amount of rotation of the steering shaft 18. Grips (not shown) are provided at both ends of the handle bar 19.

One of the grips is provided for rotation about its axis, and constitutes an accelerator operation element for controlling the drive power of a drive motor 43, which is described later, in addition to being used as a grip portion which is held by a hand. The other grip is fixed to the handle bar 19 and used as a grip portion which is held by a hand. Brake levers (not shown), which are urged away from the grips and causes the rotation of the front wheel 11 or the rear wheel 12 to slow down when pulled toward the grips, are disposed in the vicinity of the grips.

The down tube 16 has a pair of curved main frames 16a (only one of which is shown), the front ends (upper ends) of which are connected to both sides of a lower part of the head pipe 15. The main frames 16a extend backward and obliquely downward from the joints with the head pipe 15 with the distance between them increasing, and then are curved and extend horizontally backward. In addition, the main frames 16a have rear end portions extending backward and obliquely upward with the distance between them kept constant. The rear ends of the main frames 16a are connected to a plate-shaped mounting member 21 disposed horizontally.

A cross member 22 extends across upper sides of rear parts of the main frames 16a. The cross member 22 is formed in a generally U-shaped rod with both ends bent generally at a right angle, and has a main portion protruding upward from the main frames 16a with the bent ends connected to the main frames 16a. A mount table 23 protruding downward between the main frames 16a extends across the lower ends of the main frames 16a. The upper side of the mount table 23 is recessed to form therein a fuel cell accommodating section 24. A fuel cell (see FIG. 2) is accommodated in the fuel cell accommodating section 24.

A plate-like sub-frame 14 is attached between a front part of the main frames 16a forming the down tube 16 and the cross member 22 disposed on rear parts of the main frames 16a. A lithium ion battery as a secondary battery 26 is fixed to a part of the upper surface of the sub-frame 14 on slightly front side from the center thereof, and a power source system control device 50 for controlling the devices which a fuel cell system S has is fixed on a rear part of the upper surface the sub-frame 14.

A radiator 27 is attached to a front part of the head pipe 15 via a fixing member 27a, and a fan 27b for air-cooling the radiator 27 is attached behind the radiator 27 (between the radiator 27 and the head pipe 15). The fan 27b is driven by the operation of a motor 27c. A water pump 28 is attached to a front part of the down tube 16 in front of the fuel cell accommodating section 24 and below the sub-frame 14 (secondary battery 26).

The radiator 27 and the fuel cell 25 are connected by a cooling water pipe 29a through which cooling water flows from the radiator 27 to the fuel cell 25, and the water pump 28 is provided in the cooling water pipe 29a. That is, the cooling water pipe 29a extends from the radiator 27 to the water pump 28 and then from the water pump 28 to the fuel cell accommodating section 24, extends into the fuel cell accommodating section 24 through a front side thereof, and is connected to the fuel cell 25.

Also, the fuel cell 25 and the radiator 27 are connected by a cooling water pipe 29b through which cooling water having cooled the fuel cell 25 flows from the fuel cell 25 to the radiator 27, and the cooling water pipe 29b extends from the fuel cell 25 through the front side of the fuel cell accommodating section 24 to the radiator 27. Therefore, when the water pump 28 is activated, the cooling water in the radiator 27 is fed to the fuel cell 25 through the cooling water pipe 29a to cool the fuel cell 25. Then, the cooling water which has cooled the fuel cell 25 and absorbed heat therefrom is returned to the radiator 27 through the cooling water pipe 29b and cooled by the fan 27b while passing through the radiator 27.

A bypass passage 29c extends between a part of the cooling water pipe 29a upstream of the water pump 28 and a prescribed part of the cooling water pipe 29b, and a three-way valve 31 is provided at the point where the bypass passage 29c and the cooling water pipe 29b meet. The three-way valve 31 opens or closes the path between the upstream part and the downstream part of the cooling water pipe 29b when operated to switch, and the upstream part of the cooling water pipe 29b is communicated with the bypass passage 29c when the path between the upstream part and the downstream part of the cooling water pipe 29b is closed. Therefore, when the path between the upstream part and the downstream part of the cooling water pipe 29b is closed by the three-way valve 31, the upstream part of the cooling water pipe 29b, the bypass passage 29c and the downstream part of a cooling water pipe 29a forms a short flow passage via the fuel cell 25.

In this case, the capacity of cooling the fuel cell 25 decreases, and the temperature of the fuel cell 25 increases. That is, the upstream part of the cooling water pipe 29b is communicated with the bypass passage 29c by operating the three-way valve 31, the temperature of the fuel cell 25 can be increased, and the capacity of cooling the fuel cell 25 can be increased when the upstream part and the downstream part of the cooling water pipe 29b are communicated with each other. Also, when the drive power of the motor 27c is increased with the upstream part and the downstream part of the cooling water pipe 29b communicated with each other, the cooling capacity can be further increased.

A hydrogen tank 32 filled with hydrogen to be supplied to the fuel cell 25 is attached to the upper side of the mounting member 21 connected to the rear ends of the main frames 16a. The hydrogen tank 32 is connected to the fuel cell 25 via a connector 32a. That is, as shown in FIG. 2, the hydrogen tank 32 is connected to a hydrogen gas supply port of the fuel cell 25 by a gas pipe 33a for feeding hydrogen, and the connector 32a is provided on the gas pipe 33a.

The fuel cell 25 also has a hydrogen gas discharge port connected to a part of the gas pipe 33a in the vicinity and downstream of the connector 32a by a gas pipe 33b for circulation. A valve 32b for opening and closing the gas pipe 33a is provided in a hydrogen tank 32 side part of the gas pipe 33a. A circulation pump 34 for returning hydrogen gas discharged from the hydrogen gas discharge port of the fuel cell 25 to the gas pipe 33a is provided in the gas pipe 33b. Therefore, when the valve 32b is opened, the hydrogen gas in the hydrogen tank 32 can be supplied to the fuel cell 25 through the gas pipe 33a.

When the circulation pump 34 is activated in the state, unreacted hydrogen gas remaining in the fuel cell 25 can be returned to the gas pipe 33a through the gas pipe 33b and joined to hydrogen gas newly fed from the hydrogen tank 32 into the gas pipe 33a. Then, the hydrogen gas is circulated in the gas pipes 33a and 33b before being reacted with oxygen gas in the fuel cell 25. A seat 35 is disposed above a front part of the hydrogen tank 32. The seat 35 is connected to rear parts of the main frame 16a via support members 35a.

An air filter 36 is attached to a rear parts of the main frames 16a behind the cross member 22, and an air blower 37 having a motor as an electric motor of the present teaching is attached to rear parts of the main frames 16a in front of the cross member 22. A mount table (not shown) is provided between rear parts of the main frames 16a, and the air filter 36 and the air blower 37 are fixed to the down tube 16 via the mount table.

The air filter 36 and the air blower 37, and the air blower 37 and fuel cell 25 are connected by gas pipes 38a and 38b, respectively, shown in FIG. 2, and outside air is sucked through the air filter 36 and supplied to the fuel cell 25 when the air blower 37 is activated. Foreign objects in the air sucked into the air filter 36 are removed while the air passes through the air filter 36. The air filter 36 and the air blower 37 constitute an air supply device of the present teaching. The fuel cell 25 also has an air discharge port 25a through which air remaining after the reaction between oxygen gas and hydrogen gas in the fuel cell 25 is discharged to the outside. The pressure of air to be supplied from the air blower 37 to the fuel cell 25 through the gas pipe 38b is set to a value which is slightly greater than the pressure of air to be discharged from the air discharge port 25a.

A rear arm (not shown) having a pair of arm members extending backward is connected to lower rear parts of the main frames 16a via a connection member 41. Both ends of the axle of the rear wheel 12 are rotatably supported at the rear ends of the arm members of the rear arm to allow rotation of the rear wheel 12 about the axle. A motor unit 42 is attached to the outside of one of the arm members of the rear arm in such a manner as to cover the arm member. A drive motor 43 which is operated on electric power generated by the fuel cell 25 and a reduction mechanism are housed in the motor unit 42. The rear wheel 12 is rotated by the operation of the drive motor 43 and the motorcycle 10 runs.

Rear cushions 44 extend between the rear ends of the main frames 16a and the upper rear ends of the rear arm. The expansion and contraction of the rear cushions 44 allows swinging movement of the rear end of the rear arm. A drum brake (not shown) is attached on the side of the inner side the motor unit 42. The drive motor 43 is operated by control of the power source system control device 50 in accordance with the amount by which the grip is operated and automatically generates drive power in the rear wheel 12.

The motorcycle 10 has a rotary stand 45 for keeping the motorcycle 10 in an upright state when it is in a stationary state. The stand 45 is moved to its upper position as shown by solid lines in FIG. 1 when the motorcycle 10 is driven, and moved to its lower position as shown by double-dot dash lines in FIG. 1 so that the stand 45 can support the motorcycle 10 when the motorcycle 10 is held stationary. In addition, the fuel cell system S has a booster 46 for raising the voltage of the electric power generated by the fuel cell 25 and a backflow-preventing diode 47, and an electric circuit 48 is constituted of the fuel cell 25, the secondary battery 26, the drive motor 43, the booster 46, the diode 47, and electric wires connecting them.

In addition, each of the devices constituting the fuel cell system S has a sensor for detecting the various conditions thereof, and the sensors and the power source system control device 50 are connected via electric wires. That is, the air blower 37 is provided with a current sensor 51 for detecting the current supplied to the air blower 37 and a voltage sensor 52 for detecting the voltage applied to the air blower 37, and the gas pipe 38b is provided with a pressure sensor 53 for detecting the pressure of air being supplied from the air blower 37 to the fuel cell 25.

The hydrogen tank 32 is provided with a residual amount detection sensor 54, constituted of a pressure sensor, for detecting the amount of hydrogen remaining in the hydrogen tank 32, and the cooling water pipe 29b is provided with a temperature sensor 55 for detecting the temperature of cooling water being fed from the fuel cell 25 to the radiator 27 after having been fed from the radiator 27 to the fuel cell 25 to cooled the fuel cell 25. The fuel cell 25 is provided with a temperature sensor 56 for detecting the temperature of the fuel cell 25 and a voltage sensor 57 for detecting the voltage value in the fuel cell 25, and the secondary battery 26 is provided with a temperature sensor 58 for detecting the temperature of the secondary battery 26.

The electric circuit 48 is provided with a current sensor 61 for detecting the current value supplied from the fuel cell 25, a current sensor 62 for detecting the current value flowing to the drive motor 43, and a voltage sensor 63 for detecting the voltage value being applied to the drive motor 43. An electric wire 48a connected to the secondary battery 26 in the electric circuit 48 is provided with a current sensor 64 for detecting the current value flowing to the secondary battery 26. The sensors are connected to the power source system control device 50 via electric wires 51 a, 52a, 53a, 54a, 55a, 56a, 57a, 58a, 61 a, 62a, 63a and 64a, respectively, and send a detected value as an electric signal to the power source system control device 50.

Electric wires 65, 66, 67, 68, 69, 71 and 72 for transmitting a command signal from the power source system control device 50 to the valve 32b, the circulation pump 34, the motor 27c, the water pump 28, the three-way valve 31, the booster 46 and the drive motor 43, respectively, connect the power source system control device 50 and corresponding devices. The air blower 37 supplies air to the fuel cell 25 in response to a flow rate command signal sent from the power source system control device 50 through the electric wire 51 a. The valve 32b opens or closes in response to an open/close command signal from the power source system control device 50 to supply hydrogen gas from the hydrogen tank 32 to the fuel cell 25.

The fuel cell 25 generates water and electricity through a reaction between oxygen in the air supplied from the air blower 37 and hydrogen supplied from the hydrogen tank 32. The booster 46 raises the voltage of the electricity generated by the fuel cell 25 in response to a voltage command signal from the power source system control device 50, and supplies the electricity to the drive motor 43 and to the secondary battery 26 to charge the secondary battery 26. The circulation pump 34 is activated in response to an operation command signal from the power source system control device 50 and returns hydrogen gas which has not been reacted with oxygen gas in the fuel cell 25 to the gas pipe 33a through the gas pipe 33b to join it to hydrogen gas newly fed from the hydrogen tank 32 into the gas pipe 33a.

The water pump 28 is activated in response to an operation command signal from the power source system control device 50 and circulates cooling water between the radiator 27 and the fuel cell 25 to maintain the temperature of the fuel cell 25 at a prescribed temperature. The motor 27c drives the fan 27b in response to an operation command signal from the power source system control device 50 to air-cool the radiator 27. The three-way valve 31 is activated in response to an operation command signal from the power source system control device 50 and opens or closes the path between the upstream part and the downstream part of the cooling water pipe 29 to communicate the upstream part and the downstream part of the cooling water pipe 29b with each other or closes the path between the upstream part and the downstream part of the cooling water pipe 29 to communicate the upstream part of the cooling water pipe 29b with the bypass passage 29c.

The drive motor 43 receives an operation signal corresponding to the amount by which the grip constituting an accelerator operation element is operated from the power source system control device 50 and is activated in response to the operation signal. The power source system control device 50 has a CPU, a RAM, a ROM, a timer and so on. Various programs and data such as a map prepared in advance are stored in the ROM. The CPU controls the motor 27c, the water pump 28, the three-way valve 31, the valve 32b, the circulation pump 34, the air blower 37, the drive motor 43 and the booster 46 based the operation of the grip by the rider or the programs and so on prepared in advance. In addition, the motorcycle 10 has a power switch and a main switch (which are not shown). In FIG. 2, the cooling water pipe 29a and so on shown by solid lines represent pipes or electric wires through which drive current flows, and the electric wire 52a and so on shown by broken lines represent signal lines.

In this configuration, when the rider drives the motorcycle 10, the rider first sits astride the seat 35. The rider then turns on the power switch and the main switch. Then, air and hydrogen are supplied to the fuel cell 25 from air blower 37 and the hydrogen tank 32, respectively, and the fuel cell 25 generates electricity through a reaction between oxygen in the supplied air and the hydrogen. The drive motor 43 is driven by the electricity, and the motorcycle 10 starts running. At this time, the fuel cell 25 is cooled by cooling water fed from the radiator 27 by operation of the water pump 28 and maintained at a prescribed temperature. Also, the fuel cell 25 discharges water generated through the reaction between the oxygen and hydrogen to the outside together with waste gas. The waste gas is discharged into the outside atmosphere from the air discharge port 25a.

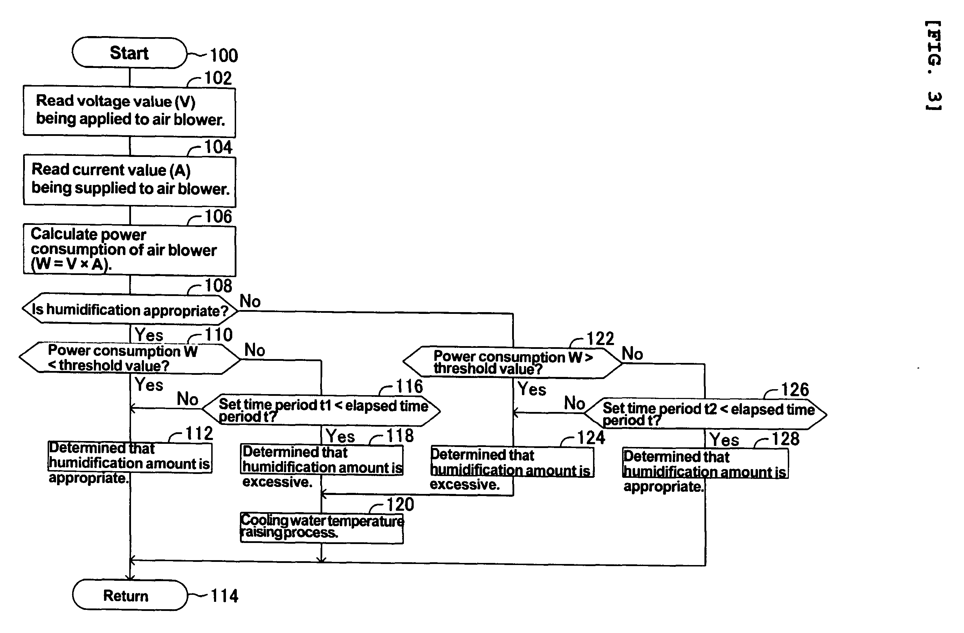

While the motorcycle 10 is running, when moisture is accumulated in the fuel cell 25, the inside of the fuel cell 25 may be excessively humidified. When the fuel cell 25 is in an excessively humidified state, the reaction between hydrogen gas and oxygen gas in air is decelerated and the power generation efficiency decreases. As a result, the driving condition of the motorcycle 10 gets worse. Therefore, the power source system control device 50 performs the program shown in the flowchart of FIG. 3 to allow the fuel cell 25 to generate electricity while resolving the excessive humidification in order to maintain the motorcycle 10 in a good driving condition. The program which is performed to allow the fuel cell 25 to generate electricity while resolving the excessively humidified state is stored in the ROM, and is repeatedly performed every prescribed period of time by the CPU after the power switch has been turned on.

After being started in step 100, the program goes to step 102, in which a process of reading a voltage value V being applied to the motor of the air blower 37 and detected by the voltage sensor 52 is carried out. The applied voltage value V is temporarily stored in the RAM. Then, the program goes to step 104, in which a process of reading a current value A being supplied to the air blower 37 and detected by the current sensor 51 is carried out. The current value A is also temporarily stored in the RAM. Then, in step 106, a process of calculating the power consumption W of the air blower 37 from the data of the applied voltage value V and the current value A stored in the RAM is carried out. The power consumption W is obtained as the product of the applied voltage value V and the current value A. This process is carried out by the CPU.

Then, in step 108, it is determined whether or not the humidification amount in the fuel cell 25 is appropriate. Here, based on a determination on whether or not the humidification amount was appropriate made in any one of steps 112, 118, 124 and 128, which are described later, when the program was executed last time, a determination is made to confirm the determination. In an initial stage after the start of the program, the humidification amount is set to be appropriate. Therefore, "YES" is selected in step 108, and the program goes to step 110. Then, in step 110, it is determined whether or not the power consumption W is smaller than a threshold value.

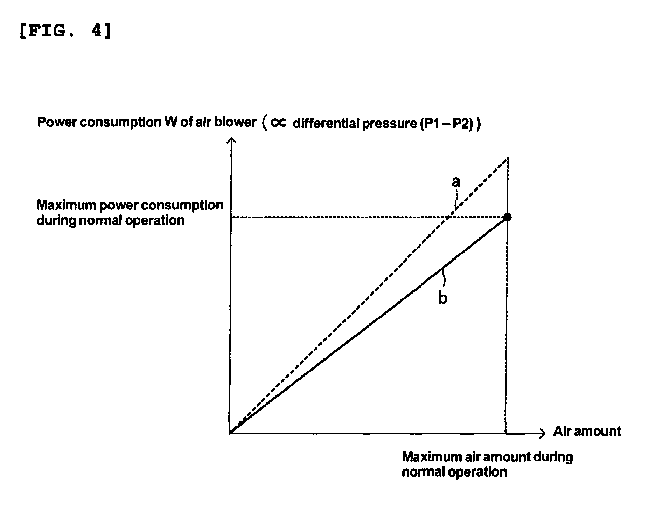

Here, it is determined whether the humidification amount is appropriate or excessive based on the relation between the value of the power consumption W obtained in the process in step 106 and a map shown in FIG. 4. The map, prepared and stored in the ROM in advance, shows the relation between the power consumption W of the motor for driving the air blower 37 and the amount of air supplied from the air blower 37 to the fuel cell 25. A broken line (a) in the map represents the threshold value. The region above the broken line (a) is the region in which the humidification amount is determined to be excessive, and the region below the broken line (a) is the region in which the humidification amount is determined to be appropriate. The solid line (b) in the map shown in FIG. 4 shows the relation between the power consumption W and the amount of air supplied to the fuel cell 25 in an appropriate state during normal operation.

The power consumption W increases and decreases in proportion to the difference between the pressure P1 of air being supplied from the air blower 37 to the fuel cell 25, which is the pressure in the gas pipe 38b detected by the pressure sensor 53, and the pressure P2 (atmospheric pressure) of waste gas to be discharged from the air discharge port 25a of the fuel cell 25 into the outside atmosphere. That is, when the humidification amount in the fuel cell 25 increases, the air supplied from the air blower 37 to the fuel cell 25 cannot pass through the fuel cell 25 easily, and the difference between the pressure P1 of the air being supplied to the fuel cell 25 and the pressure P2 of the waste gas to be discharged from the air discharge port 25a increases.

Therefore, the air blower 37 is controlled to increase the drive power of the motor so that a prescribed amount of air can be supplied to the fuel cell 25, and the power consumption W increases as the difference between the pressure P1 and the pressure P2 increases. Thus, in step 108, it can be determined whether the fuel cell 25 is in an excessively humidified state or in an appropriate state by determining whether or not the difference between the pressure P1 and the pressure P2 is not greater than a maximum difference between the pressure P1 and the pressure P2 set in advance as a set value P0.

Here, if the humidification amount in the fuel cell 25 is appropriate and "YES" is therefore selected in step 110, not excessive, that is, the value of the power consumption W is in the region below the broken line (a) in FIG. 4, the program goes to step 112, in which it is determined that the humidification amount is appropriate. Then, the program goes to step 114 and is temporarily halted. At this time, the fuel cell 25 performs normal operation, and the relation between the amount of air supplied by the air blower 37 and the power consumption corresponds to the solid line (b) in FIG. 4 or a region in the vicinity thereof. Then, the program is restarted from step 100, and the processes in steps 102 to 106 are carried out to update the data obtained through detection and calculation.

Then, in step 108, "YES" is selected since the humidification amount was determined to be appropriate in step 112 when the program was executed last time. As long as "YES" is selected in step 110, the humidification amount is determined to be appropriate and the fuel cell 25 operates generally satisfying the relation between the power consumption W and the air amount along the solid line (b) in the map shown in FIG. 4. When "NO" is selected in step 110 after "YES" is selected in step 108, the program goes to step 116, in which it is determined whether the elapsed time period t after the selection of "NO" in step 110 is longer than a preset set time period t1.

The set time period t1 is prepared to determine whether the determination of "NO" obtained in the process in step 110 is caused by an error such as variation or based on reliable detection, and the elapsed time period t is a time period measured by the timer provided in the power source system control device 50. If the elapsed time period t is longer than the set time period t1, it is determined that the determination of "NO" in step 110 is correct and the humidification amount in the fuel cell 25 is excessive. Here, if the elapsed time period t is shorter than the set time period t1 and "NO" is therefore selected, the program goes to step 112, in which it is determined that the humidification amount is appropriate. Then, the program goes to step 114 and is temporarily halted. In this case, the fuel cell 25 continues normal operation.

If the elapsed time period t is longer than the set time period t1 and "YES" is therefore selected in step 116, the program goes to step 118, in which it is determined the humidification amount is excessive. Then, in step 120, a process to raise the temperature of the cooling water for cooling the fuel cell 25 is carried out. The process is carried out by the control performed by the power source system control device 50 to change the rotational speed of the motor 27c or the operating condition of the water pump 28 or to switch the three-way valve 31 based on the amount by which the temperature should be increased.

That is, to increase the temperature of the fuel cell 25 slightly, the operation of the water pump 28 is slowed down or the rotation of the motor 27c is slowed down or stopped. To increase the temperature of the fuel cell 25 to a large extent, the three-way valve 31 is switched to close the path between the upstream part and the downstream part of the cooling water pipe 29b in order to form a passage by the upper part of the cooling water pipe 29b, the bypass passage 29c, the downstream part of the cooling water pipe 29a and the fuel cell 25. By selecting and properly carrying out the operations based on the amount by which the temperature should be increased, the temperature of the fuel cell 25 can be increased so that the humidification amount can be decreased by the heat. As a result, the humidification amount in the fuel cell 25 is restored to an appropriate state (the region below the broken line (a) in FIG. 4), and the power generation state of the fuel cell 25 is restored to normal.

When the process to increase the temperature of the fuel cell 25 is completed in step 120, the program goes to step 114 and is temporarily halted. Then, the program is restarted from step 100, and goes to step 108 after the processes in steps 102 to 106. Here, "NO" is selected since the humidification amount was determined to be excessive in step 118 when the program was executed last time and the program goes to step 122.

Then, in step 122, it is determined whether or not the power consumption W is greater than the threshold value.

Here, if the value of the power consumption W is in the region above the broken line (a) in FIG. 4 and "YES" is therefore selected in step 122, the program goes to step 124, in which it is determined that the humidification amount is excessive. Then, the program goes to step 120, in which the process to increase the temperature of cooling water for cooling the fuel cell 25 in step 120 described before is carried out. Then, the program goes to step 114 and is temporarily halted.

Then, the program is restarted from step 100, and, as long as "YES" is selected in step 122 after "NO" is selected in step 108, the humidification amount is determined to be excessive in step 124 and a process to increase the temperature of the cooling water for cooling the fuel cell 25 is carried out in step 120 while updating the data obtained through the processes in steps 102 to 106. Also, if the power consumption W is smaller than the threshold value and "NO" is selected in step 122, the program goes to step 126, in which it is determined whether or not the elapsed time period t after the selection of "NO" in step 122 is longer than a preset set time period t2.

The set time period t2 is, as in the case with the set time period t1 described before, prepared to determine whether the determination of "NO" obtained in the process in step 122 is caused by an error such as variation or based on reliable detection, and it is determined that the determination of "NO" in step 122 is correct and the humidification amount in the fuel cell 25 is appropriate if the elapsed time period t is longer than the set time period t2. Here, if the elapsed time period t is shorter than the set time period t2 and "NO" is therefore selected, the program goes to step 124, in which it is determined that the humidification amount is excessive. Then, the program goes to step 120, and a process to increase the temperature of the cooling water for cooling the fuel cell 25 is carried out. Then, the program goes to step 114 and is temporarily halted.

If the elapsed time period t is longer than the set time period t2 in the process in step 126 and "YES" is therefore selected in step 126, the program goes to step 128, in which it is determined that the humidification amount is appropriate. Then, the fuel cell 25 operates normally. Then, the program goes to step 114 and is temporarily halted. After that, the processes described before are repeated every prescribed time period. When the humidification amount in the fuel cell 25 becomes excessive, the temperature of the cooling water is increased to eliminate the excess in the humidification amount in order to maintain the good operating condition. Therefore, the motorcycle 10 keeps running in a good condition.

As described above, in the fuel cell system according to this embodiment, the determination on the humidification state in the fuel cell 25 is made based on the difference between the electric power consumed to drive the air blower 37 and a preset threshold value of the power consumption. Therefore, since the determination on the humidification state can be made using the devices in which the fuel cell system S originally has, the constitution of the fuel cell system S can be simplified. Also, since the number of devices can be decrease, the fuel cell system S can be small in size and increased in the degree of freedom in layout. In addition, since there is no need for members, such as joints, which are needed when additional devices are introduced, the reliability of the pipes and so on is improved.

Also, since the threshold value of the power consumption is set based on the power which the air blower 37 consumes when a constant amount of air is supplied to the fuel cell 25, in which the humidification state changes, and used as map data, the humidification state in the fuel cell 25 can be determined by a simple control. In addition, since the pressure of air being supplied from the air blower 37 to the fuel cell 25 through the gas pipe 38b is set to a value slightly greater than the pressure of air to be discharged from the air discharge port 25a, the pressure of air to be discharged from the air blower 37 can be lowered and the size of the air blower 37 can be decreased for that.

Also, since a change in the differential pressure between the pressure P1 of air being supplied to the fuel cell 25 and the pressure P2 of waste gas to be discharged from the air discharge port 25a causes a significant change in the power consumption of the motor of the air blower 37, the determination of the humidification state can be easily made and the reliability of the determination can be improved. In addition, since the temperature of the fuel cell 25 is increased by adjusting the cooling capacity of the radiator 27 or switching the three-way valve 31 to form a short flow passage when the inside of the fuel cell 25 excessively humidified, there is no need to provide new devices and the fuel cell system S can be simplified in structure and reduced in size. Also, wasteful consumption of electric power by an auxiliary device provided in the fuel cell system S can be prevented. Further, when the inside of the fuel cell 25 is excessively humidified, since the air blower 37 is so controlled that as the difference between the power being consumed and the threshold value of the power consumption is greater, the temperature of the cooling water is increased more, the excessive humidification can be resolved properly depending on the humidification amount.

The fuel cell system according to the present teaching is not limited to the embodiment described above and may be modified as needed. For example, although the fuel cell system S is applied to the motorcycle 10 in the embodiment described above, the device which uses the fuel cell system is not limited to the motorcycle 10 and may be a vehicle such as a three-wheeled motor vehicle or four-wheeled motor vehicle or a device which uses electric power other than vehicles. Also, although the temperature of the fuel cell 25 is increased by adjusting the cooling capacity of the radiator 27 or switching the three-way valve 31 to form a short flow passage in the embodiment described above, the fuel cell 25 may be heated by a heating device such as a heater instead.

In this case, the temperature of the fuel cell 25 can be increased in as short period of time. In addition, when the temperature of the fuel cell 25 is increased by adjusting the cooling capacity of the radiator 27 or switching the three-way valve 31, these methods may be combined with decreasing or stopping the driving speed of the water pump 28 and/or the motor 27c, and switching of the three-way valve 31 can be combined before or after these processes. The other parts constituting the fuel cell system according to the present invention may be modified as needed within the technical scope of the present teaching.

The description above discloses (amongst others), an embodiment of the fuel cell system having a fuel cell which generates electric power through a reaction between hydrogen gas supplied from a hydrogen supply device and oxygen gas in air supplied from an air supply device having an electric motor; and a humidification state determination means for determining the humidification state in the fuel cell based on the difference between the electric power consumed by the electric motor when air is supplied from the air supply device to the fuel cell and a preset threshold value of power consumption.

In the fuel cell system according to this embodiment, the determination on the humidification state is made based on the difference between the electric power consumed by the electric motor to drive air supply device and a preset threshold value of the power consumption. That is, when the inside of the fuel cell is excessively humidified, the inside of fuel cell is in a clogged state and the air supplied from the air supply device to the fuel cell cannot easily pass through the fuel cell. Thus, the torque of the electric motor for driving the air supply device increases and power consumption increases to supply a constant amount of air to the fuel cell in an excessively humidified state. Therefore, the humidification state in the fuel cell can be known by measuring the power consumption of the electric motor.

In this case, a threshold value of power consumption is set in advance and the humidification state is determined with reference to the threshold value. For example, when the power consumption of the electric motor exceeds the threshold value, it is determined that an excessively humidified state is established. According to the present embodiment, since the determination on the humidification state is made using some devices originally equipped in the fuel cell system, there is no need to additionally provide a resistance detection means for detecting the internal resistance of the fuel cell, a pressure sensor for detecting the pressure of air supplied from the air supply device to the fuel cell and so on, and the fuel cell system can be simplified in structure. Also, since the number of devices can be reduced, the fuel cell system can be reduced in size and improve the degree of freedom in layout. In addition, the number of members such as joins for connecting the devices can be decreased, the reliability of the pipes such as air supply pipes improves. In addition, the humidification state is determined by simply measuring the power consumption of the electric motor, there is no need to change the operating condition of the fuel cell and the control method can be simplified.

According to a further embodiment, the threshold value of power consumption is set based on the electric power which the electric motor consumes when a constant amount of air is supplied to the fuel cell, in which the humidification state changes. In this case, the threshold value of power consumption is used as map data. Therefore, the humidification state in the fuel cell can be determined by a simple control using the map.

According to a further embodiment, the pressure of air to be supplied from the air supply device to the fuel cell is set to a pressure which is greater than the pressure of air having passed through the fuel cell and to be discharged to the outside of the fuel cell and close to the pressure of air to be discharged.

In this configuration, the pressure of air to be discharged from the air supply device can be lowered, and the air supply device can be small in size for that. Also, since the power consumption of electric motor of the air supply device varies largely in response to a change in the humidification state even when a change in the differential pressure between the pressure of air supplied from the air supply device to the fuel cell and the pressure of air to be discharged from the fuel cell is small, the humidification state can be easily determined and the reliability of the determination is high.

According to another embodiment, the fuel cell system further includes an operation temperature control means for increasing the operation temperature of the fuel cell when the humidification state determination means determines that the inside of the fuel cell is excessively humidified.

In this configuration, the excessively humidified state can be reliably resolved by a simple method. There are various methods for resolving an excessively humidified state, including decreasing the humidification amount to hydrogen gas or air and increasing the amount of hydrogen gas or air to be supplied to the fuel cell. In the present invention, however, excessive humidified can be resolved by means of simply increasing the operation temperature of the fuel cell. As the operation temperature control means in this case, a heating device, such as a heater, for heating the fuel cell or a means for increasing the temperature of the fuel cell by decreasing the cooling capacity of a cooling device for cooling the fuel cell can be used.

According to yet another embodiment, the fuel cell system further includes a cooling water device for cooling the fuel cell, and that the operation temperature control means is constituted of a cooling water temperature adjusting means which increases the operation temperature of the fuel cell by adjusting the cooling capacity of the cooling water device.

Although a heating device such as a heater may be provided as an operation temperature control means for increasing the temperature of the fuel cell during operation as described before, the operation temperature of the fuel cell is increased by adjusting the cooling capacity of the cooling water device in the present embodiment. Thus, there is no need to provide a new device and the fuel cell system can be therefore simplified in structure and reduced in size. Also, wasteful consumption of electric power by an auxiliary device provided in the fuel cell system can be prevented.

According to still another preferred embodiment of the fuel cell system, when the humidification state determination means determines that the inside of the fuel cell is excessively humidified, the cooling water temperature adjusting means makes an adjustment to increase the temperature of cooling water in the cooling water device as the difference between the electric power being consumed in the electric motor and a preset threshold value of power consumption is greater. In this case, the methods for increasing the cooling water temperature include decreasing the flow rate of cooling water being fed from the cooling water device to the fuel cell and decreasing the cooling capacity by switching a valve to shorten the length of the passage through which cooling water flows. In this configuration, excessive humidification can be resolved properly.

The description still further discloses, in order to provide a fuel cell system which is simple in structure and easy to control, and which is provided with a humidification state determination means which can determine the humidification state of a fuel cell without changing an operating condition, a preferred embodiment of a fuel cell system S which is constituted of a fuel cell 25 which generates electric power through a reaction between hydrogen gas fed from a hydrogen tank 32 and oxygen gas in air fed from an air blower 37; and a power source system control device 50 for determining the humidification state in the fuel cell 25 based on the difference between the power consumption of the air blower 37 and a preset threshold value. The pressure of air to be supplied to the fuel cell 25 may be set to a pressure which is greater than the pressure of air to be discharged from the fuel cell 25 and close to the pressure. When the fuel cell 25 is excessively humidified, the temperature of the fuel cell 25 may be increased by adjusting the cooling capacity of a radiator 27. As the difference between the power consumption of the air blower 37 and the threshold value is greater, the temperature of the cooling water in the radiator 27 may be increased more.

In the description above, according to a preferred first aspect, there is provided a fuel cell system comprising: a fuel cell which generates electric power through a reaction between hydrogen gas supplied from a hydrogen supply device and oxygen gas in air supplied from an air supply device having an electric motor; and a humidification state determination means for determining the humidification state in the fuel cell based on the difference between the electric power consumed by the electric motor when air is supplied from the air supply device to the fuel cell and a preset threshold value of power consumption.

Further, according to a preferred second aspect, the threshold value of power consumption is set based on the electric power which the electric motor consumes when a constant amount of air is supplied to the fuel cell, in which the humidification state changes.

Further, according to a preferred third aspect, the pressure of air to be supplied from the air supply device to the fuel cell is set to a pressure which is greater than the pressure of air having passed through the fuel cell and to be discharged to the outside of the fuel cell and close to the pressure of air to be discharged.

Further, according to a preferred fourth aspect, the fuel cell system may further comprise an operation temperature control means for increasing the operation temperature of the fuel cell when the humidification state determination means determines that the inside of the fuel cell is excessively humidified.

Further, according to a preferred fifth aspect, the fuel cell system may further comprise a cooling water device for cooling the fuel cell, wherein the operation temperature control means is constituted of a cooling water temperature adjusting means which increases the operation temperature of the fuel cell by adjusting the cooling capacity of the cooling water device.

Further, according to a preferred sixth aspect, when the humidification state determination means determines that the inside of the fuel cell is excessively humidified, the cooling water temperature adjusting means makes an adjustment to increase the temperature of cooling water in the cooling water device as the difference between the electric power being consumed in the electric motor and a preset threshold value of power consumption is greater.

## Claims

1. Fuel cell system comprising a fuel cell which generates electric power through a reaction between hydrogen gas supplied from a hydrogen supply device, and oxygen gas in air supplied from an air supply device having an electric motor,
**characterized by**
a humidification state determination means configured to determine the humidification state in the fuel cell based on a power consumption (W) of the electric motor of the air supply device.

2. Fuel cell system according to claim 1, wherein the humidification sate determining means is configured to compare the power consumption (W) of the electric motor when air is supplied from the air supply device to the fuel cell with a preset threshold value of power consumption to determine the humidification state.

3. Fuel cell system according to claim 2, wherein the threshold value of power consumption is defined as a map showing the relation between the power consumption (W) of the motor of the air supply device and the amount of air supplied to the fuel cell.

4. Fuel cell system according to claim 3, wherein the threshold value of power consumption is set based on the electric power which the electric motor consumes when a constant amount of air is supplied to the fuel cell, in which the humidification state changes.

5. Fuel cell system according to one of the claims 1 to 4, wherein the pressure of air to be supplied from the air supply device to the fuel cell is set to a pressure which is greater than the pressure of air having passed through the fuel cell and to be discharged to the outside of the fuel cell and close to the pressure of air to be discharged.

6. Fuel cell system according to one of the claims 1 to 5, further comprising an operation temperature control means for increasing the operation temperature of the fuel cell when the humidification state determination means determines that the inside of the fuel cell is excessively humidified.

7. Fuel cell system according to claim 6, further comprising a cooling water device for cooling the fuel cell, wherein the operation temperature control means is constituted of a cooling water temperature adjusting means which increases the operation temperature of the fuel cell by adjusting the cooling capacity of the cooling water device.

8. Fuel cell system according to claim 7, wherein, when the humidification state determination means determines that the inside of the fuel cell is excessively humidified, the cooling water temperature adjusting means makes an adjustment to increase the temperature of cooling water in the cooling water device as the difference between the electric power being consumed in the electric motor and a preset threshold value of power consumption is greater.
